# EUROPÄISCHE PATENTSCHRIFT

(11) **EP 0 878 654 B1**
(45) Veröffentlichungstag und Bekanntmachung des Hinweises auf die Patenterteilung: **08.09.2004**
(21) Anmeldenummer: 98107626.8
(22) Anmeldetag: 27.04.1998
(51) Int. Cl.: F16K 47/02

(54) **Geräuscharmes Ventil für Sanitärarmaturen**
Low noise valve for sanitary fittings
Robinet-vannes à bruit faible pour robinetterie sanitaire

(30) Priorität: 16.05.1997 DE 19720734
(43) Veröffentlichungstag der Anmeldung: 18.11.1998
(73) Patentinhaber: Grohe Water Technology AG & Co. KG, 58675 Hemer (DE)
(72) Erfinder: Pawelzik, Manfred, 59494 Soest (DE)

(56) Entgegenhaltungen:
- EP-A- 0 311 573
- EP-A- 0 386 613
- DE-A- 3 540 465
- DE-A- 3 736 794
- FR-A- 2 500 564
- FR-A- 2 568 658
- US-A- 4 218 041
- US-A- 4 327 771

## Beschreibung

Die Erfindung betrifft ein geräuscharmes Ventil für Sanitärarmaturen, insbesondere Misch- und Dosierventil, mit einer Festscheibe, die mindestens eine Wassereinlaßöffnung enthält, und einer zur Festscheibe beweglich angeordneten Steuerscheibe, die mit wenigstens einem als Durchbruch ausgebildeten Überströmkanal versehen ist, und deren von der Festscheibe abgekehrte Stirnseite von einer Abdeck- und Führungsscheibe gehalten ist, wobei die Abdeck- und Führungsscheibe eine wenigstens dem Querschnitt des Durchbruchs entsprechende Höhlung aufweist, in deren Bereich ein Körper zur Fließgeräuschminderung angeordnet ist, der sich mit seinem Außenrand bis zur Stirnseite der Steuerscheibe erstreckt.

Ein derartiges Ventil ist aus der deutschen Offenlegungsschrift DE 32 44 175 A1 bekannt. Zur Fließgeräuschminderung ist hierbei eine Membran parallel zur Steuer- oder Regelscheibe angeordnet, mit der eine Höhlung in dem Führungs- und Mitnahmeglied zum Überströmkanal abgetrennt ist. Zusätzlich kann bei dieser Ausbildung der Membran ein Sieb vorgelagert sein, welches am Randbereich zwischen Membran und Regelscheibe eingespannt werden kann, wobei das Sieb topfartig in den Wasserumlenkkanal der Steuer- bzw. Regelscheibe hineingezogen und entsprechend dem Wasserstrom gewölbt ausgebildet sein soll.
Ein derartiger Körper zur Fließgeräuschreduzierung in Form einer Membran ist jedoch relativ aufwendig in der Herstellung sowie anfällig und zeigt meist auch ein ungünstiges Alterungsverhalten.
Aus der FR-A-2 500 564 ist außerdem ein Ventil bekannt, bei dem eine Gummikappe in der Höhlung angeordnet ist. Diese Gummikappe dient einerseits dem dichten Abschluss zwischen der Steuerscheibe und der Abdeck- und Führungsscheibe und trägt andererseits nach innen in Richtung auf die Steuerscheibe zeigende, der Lärmdämpfung dienende Zapfen. Hierbei soll die Gummikappe aufgrund ihrer Elastizität lärmdämpfend wirken und zusätzlich in der Abdeck- und Führungsscheibe ein ebenfalls schwingungsdämpfendes Luftpolster begrenzen.
Ferner ist aus der US-A-4 327 771 ein anderes Ventil bekannt, bei dem im Oberflächenkanal ein Sieb aus einem elastischen Metall-, Kunststoff- oder Gummigeflecht angeordnet sein soll, das reibschlüssig an den Seitenwänden des Oberflächenkanals gehalten wird.

Der Erfindung liegt die Aufgabe zugrunde, das im Oberbegriff des Anspruchs 1 angegebene geräuscharme Ventil zu verbessern.

Diese Aufgabe wird erfindungsgemäß dadurch gelöst, daß ein starrer Körper aus Kunststoff vorgesehen ist, dessen dem zuströmenden Wasser zugekehrte Oberfläche kugelförmig gewölbt oder hohlkegelförmig oder hyperboloidförmig oder paraboloidförmig oder napfförmig gestaltet ist, und daß der Körper zumindest an der dem zuströmenden Wasser zugekehrten Oberfläche eine Perforation aufweist.
Weitere Ausgestaltungen der Erfindung sind in den Ansprüchen 2 bis 9 angegeben.

Mit den erfindungsgemäß vorgeschlagenen Maßnahmen kann eine unerwartet wirksame Fließgeräuschreduzierung erzielt werden. Hierbei kann eine Membranausbildung ersatzlos entfallen. Darüber hinaus ist auch ein Metallsiebgeflecht, welches in der Regel schwer handhabbar ist, nicht mehr erforderlich. Zweckmäßig kann der Körper als konkav gewölbte Platte aus Kunststoff vorgesehen werden. Alternativ kann aber auch der Körper unmittelbar an der aus Kunststoff hergestellten Abdeck- und Führungsscheibe mit angespritzt werden.

Ausführungsbeispiele der Erfindung sind in der Zeichnung dargestellt und werden im folgenden näher beschrieben. Es zeigt
- Fig. 1: eine in Sanitärarmaturen einsetzbare Mischventilkartusche im Längsschnitt in der Absperrstellung;
- Fig. 2: die Mischventilkartusche gemäß Fig. 1 in der Schnittebene II;
- Fig. 3: die in Fig. 2 gezeigte Mischventilkartusche in der Schnittebene III;
- Fig. 4: die in Fig. 1 gezeigte perforierte Platte mit einer kugelsegmentförmigen Wölbung;
- Fig. 5: eine andere perforierte Platte im Längsschnitt mit einer napfartigen Wölbung;
- Fig. 6: eine weitere Ausführungsform einer perforierten Platte mit hyperboloidförmiger Wölbung;
- Fig. 7: ein weiteres Ausführungsbeispiel der perforierten Platte mit einer hohlkegelförmigen Ausbildung;
- Fig. 8: einen Teil der Perforation, wie sie in den Platten gemäß Fig. 4 bis 7 eingesetzt ist in Draufsicht, wobei die Öffnungen im Querschnitt ein Quadrat bilden;
- Fig. 9: ein anderes Ausführungsbeispiel für eine Perforation, wobei die Öffnungen im Querschnitt einen Kreis bilden;
- Fig. 10: ein anderes Ausführungsbeispiel einer Führungs- und Abdeckplatte in Ansicht von unten, wobei der Körper zur Fließgeräuschminderung einstükkig an der Führungs- und Abdeckplatte ausgebildet ist;
- Fig. 11: die Führungs- und Abdeckplatte gemäß Fig. 10 in der Schnittebene XI;
- Fig. 12: die Führungs- und Abdeckplatte gemäß Fig. 10 in der Schnittebene XII.

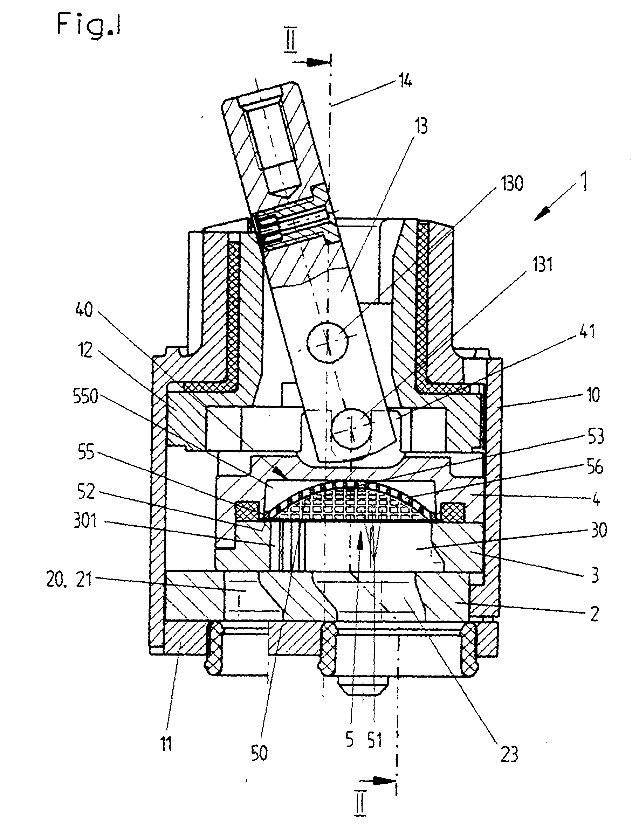

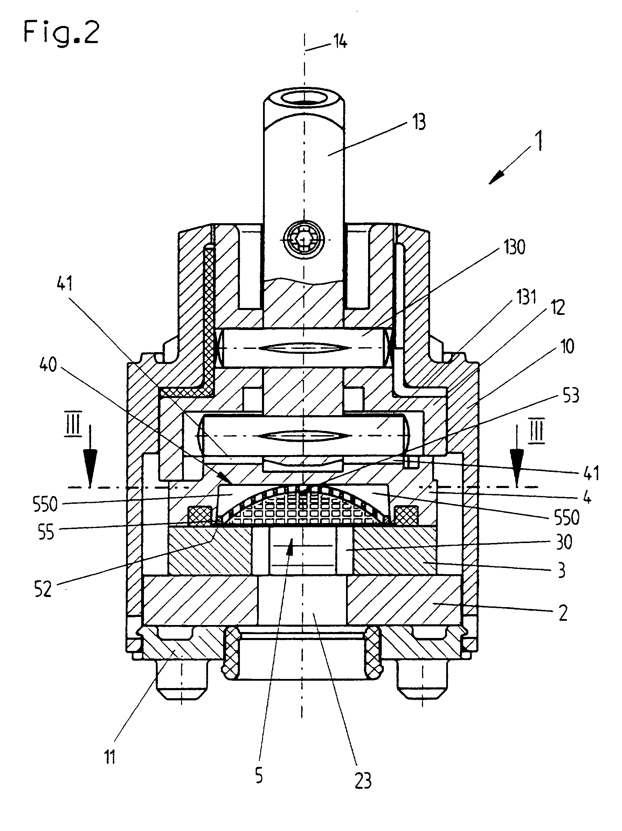

In Fig. 1 bis 3 ist eine Mischventilkartusche 1 gezeigt, die in eine nicht dargestellte Sanitärarmatur einzusetzen ist. In der Sanitärarmatur ist hierbei in der Regel ein Aufnahmeraum für die Mischventilkartusche 1 vorgesehen, wobei im Grund des Aufnahmeraums Anschlußkanäle münden für das zufließende Kalt- und Warmwasser sowie für das in der Mischventilkartusche 1 erzeugte Mischwasser.
Die Mischventilkartusche 1 ist in einem Kartuschengehäuse 10 mit einem Kartuschenboden 11 ausgebildet. Im Kartuschenboden 11 sind gedichtete Durchführungen für das zufließende Kalt- und Warmwasser sowie für das abfließende Mischwasser ausgebildet. An der Innenseite des Kartuschenbodens 11 ist eine Festscheibe 2 aus Keramikmaterial angeordnet, in der eine Einlaßöffnung 20 für Kaltwasser und eine Einlaßöffnung 21 für Warmwasser auf einem Kreisbogen angeordnet sind - in der Zeichnung ist in Fig. 1 lediglich eine Einlaßöffnung sichtbar dargestellt, während die andere hinter der Zeichenebene unsichtbar bleibt - sowie eine Auslaßöffnung 23 für das Mischwasser vorgesehen ist. An der Festscheibe 2 ist an einer geglätteten Stirnseite eine Steuerscheibe 3 mit einer ebenfalls geglätteten Stirnseite wasserdicht und verschiebbar angelagert. In der Steuerscheibe 3 ist als Durchbruch ein Überströmkanal 30 ausgebildet. An der der Festscheibe 2 abgekehrten Stirnseite der Steuerscheibe 3 ist eine Abdeck- und Führungsscheibe 4 aus Kunststoff vorgesehen, von der die Steuerscheibe 3 gedichtet aufgenommen und formschlüssig gehaltert ist. Die Abdeck- und Führungsscheibe 4 weist hierbei im Querschnitt eine kreisförmige Höhlung 40 auf, in der ein Körper 5 in Form einer gewölbten Platte 55 zur Fließgeräuschreduzierung angeordnet ist. An der gegenüberliegenden Seite ist die Abdeck- und Führungsscheibe 4 an einem axial in dem Kartuschengehäuse 10 drehbar gehaltenen Drehglied 12 angelagert. In dem Drehglied 12 ist ein in zwei Freiheitsgraden bewegbarer Stellhebel 13 angeordnet. Der Stellhebel 13 ist mit einem Lagerstift 130 drehfest mit dem Drehglied 12 verbunden, wobei der Stellhebel 13 um die Achse des Lagerstifts 130 verschwenkbar ist. Am inneren Ende des Stellhebels 13 ist parallel zum Lagerstift 130 ein weiterer Stift 131 an dem Stellhebel 13 fixiert. Der Stift 131 greift hierbei in eine Gabel 41 der Abdeck- und Führungsscheibe 4, so daß mit dem Stellhebel 13 durch eine Drehung um die Mittelachse 14 die Abdeck- und Führungsscheibe 4 mit der formschlüssig gehalterten Steuerscheibe 3 relativ zur Festscheibe 2 verdreht werden kann. Durch ein Verschwenken des Stellhebels 13 um die Achse des Lagerstifts 130 kann dagegen die Abdeck- und Führungsscheibe 4 mit der Steuerscheibe 3 radial zur Festscheibe 2 verschoben werden.
Mit einem Verschwenken des Stellhebels 13 um die Achse des Lagerstifts 130 können somit in einem ersten Freiheitsgrad die Einlaßöffnungen 20,21 für Kalt- und/oder Warmwasser mit der Auslaßöffnung 23 in Überdeckung gebracht werden, so daß in diesem Freiheitsgrad die Wasserdurchflußmenge von 0 bis zum Maximum einstellbar ist. Durch eine Drehung des Stellhebels 13 um die Mittelachse 14 - dem zweiten Freiheitsgrad - kann dagegen das Mischungsverhältnis des zufließenden Kalt- und Warmwassers eingestellt werden. In diesem Freiheitsgrad können somit die Einlaßquerschnitte der beiden Einlaßöffnungen 20,21 für Kalt- oder Warmwasser gegenläufig verändert werden.

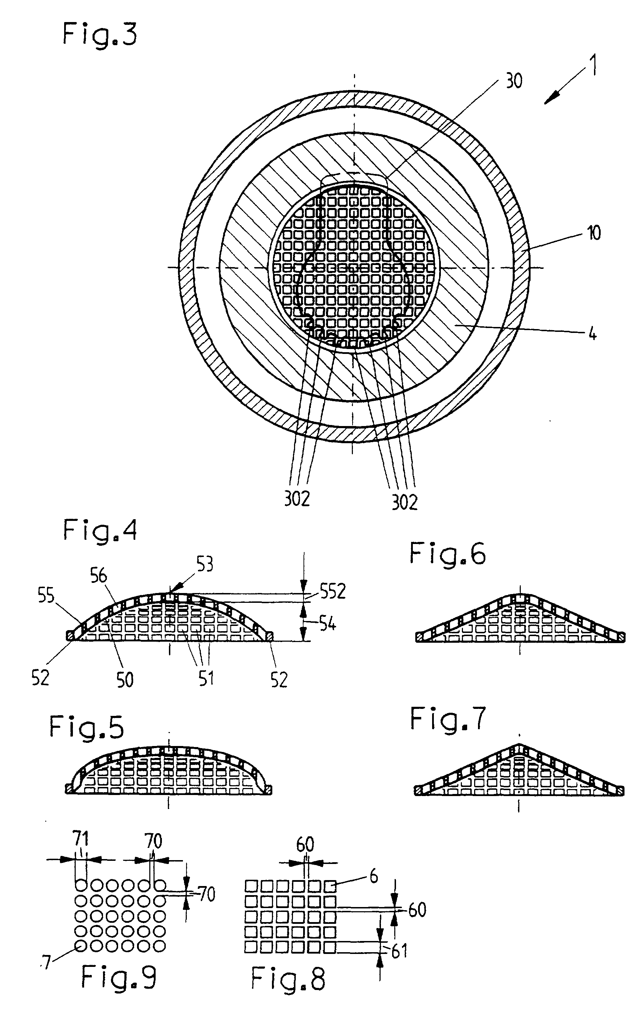

Die im Querschnitt etwa kreisförmig ausgebildete Höhlung 40 in der Abdeck- und Führungsscheibe 4 nimmt die in Fig. 4 dargestellte als Kugelabschnitt gewölbte Platte 55 auf. Die Platte 55 liegt mit ihrem Außenrand 52 an der äußeren Stirnfläche der Regelscheibe 3 an. Andererseits ist die Platte 55 mit ihrem Scheitel 53 im Grund der Höhlung 40 abgestützt. Hierbei entsteht durch die Einlagerung der Platte 55 eine ringförmige Kammer 550 in der Höhlung 40, die durch eine Perforation 51 mit dem Überströmkanal 30 verbunden ist. Die Platte 55 weist eine Dicke 552 von etwa 0,7 mm auf. Die vom Wasser angeströmte Oberfläche 50 ist kugelförmig gewölbt mit einem Kugelradius von 11 mm. Der Scheitel der vom Wasser angeströmten Oberfläche weist hierbei eine Höhe 54, von der Unterkante des Außenrands 52 an gemessen, von etwa 3 mm auf.
Die Platte 55 weist an der gesamten vom Wasser angeströmten Oberfläche 55 die Perforation 51 auf. Die Perforation 51 ist regelmäßig siebartig von Durchgangsbohrungen 56 gebildet, die im Querschnitt jeweils ein Quadrat 6 bilden. Die Durchgangsbohrungen 56 sind dabei zueinander parallel und senkrecht zur Steuerscheibe 3 angeordnet. Das Quadrat 6 weist hierbei eine Seitenlänge 61 von etwa 0,8 mm auf. Der Abstand 60 der einzelnen Quadrate 6 beträgt dabei etwa 0,3 mm , wie es insbesondere aus Fig. 8 zu entnehmen ist.

Als weiteres Mittel zur Fließgeräuschreduzierung ist die Seitenwand des Überströmkanals 30, die mit den Einlaßöffnungen 20,21 als Steuerkante zusammenwirkt, mit einer Verzahnung 301 versehen, wie es insbesondere aus Fig. 1 und 3 ersichtlich ist. Mit der Verzahnung 301 wird während der Anfangsphase des Öffnungsvorgangs und der Endphase des Schließvorgangs das einströmende Wasser durch Zahnlücken 302 in Einzelströme aufgeteilt. Die Einlaßöffnung 20 für Kaltwasser und die Einlaßöffnung 21 für Warmwasser sind hierbei auf einem Kreisbogen angeordnet und kreisringausschnittförmig ausgebildet. Der Überströmkanal 30 der Steuerscheibe 3 ist mit einer entsprechend kreisbogenförmigen Seitenwand ausgebildet, in der symmetrisch sieben Zahnlücken 302 ausgebildet sind, deren maximale Tiefe etwa 1,1 mm beträgt.
Alternativ zu dem in Fig. 1 bis 4 dargestellten Platte 55, die als Kugelsegment ausgebildet ist, kann die Platte 55 auch mit einer napfförmigen Wölbung versehen sein, wie es insbesondere aus Fig. 5 ersichtlich ist. Auch kann die Platte 55 eine Wölbung in Form eines Hyperboloids aufweisen, wie es aus Fig. 6 ersichtlich ist. Schließlich kann die Platte auch hohlkegelförmig, wie es aus Fig. 7 ersichtlich ist, oder als Paraboloid ausgebildet sein.

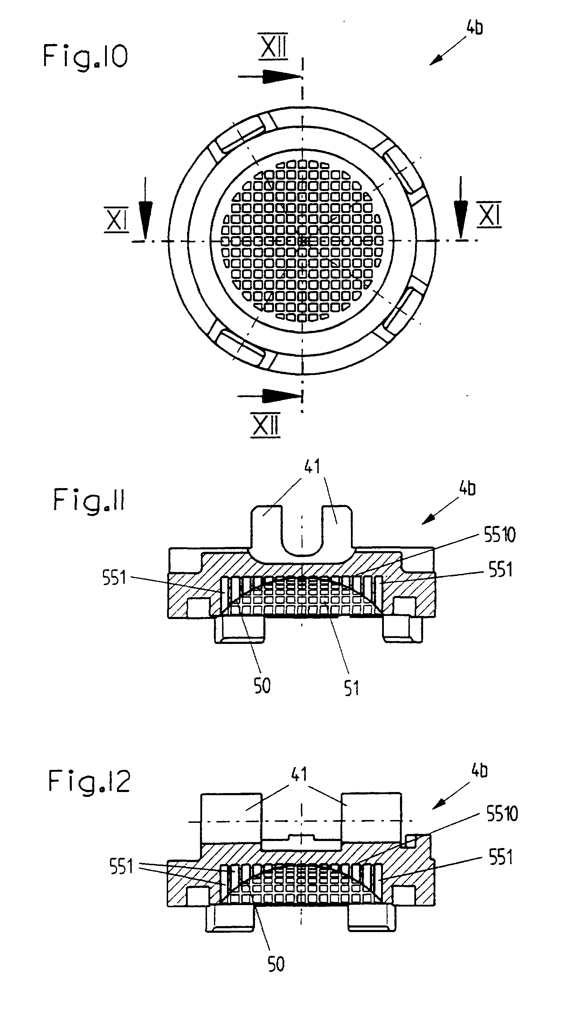

Alternativ zur Ausbildung des Hohlkörpers 5 als separate Platte 55 kann dieser auch unmittelbar an einer Abdeck- und Führungsplatte 4b angeformt sein, wie es aus Fig. 10 bis 12 ersichtlich ist. Die Höhlung weist hierbei eine kugelsegmentförmige vom Wasser angeströmte Oberfläche 50 auf und entspricht der in Fig. 1 bis 4 dargestellten Oberfläche 50. Die Perforation 51 an der Oberfläche 50 entspricht ebenfalls dem vorgeschriebenen Ausführungsbeispiel, wobei allerdings die Öffnungen als Sackbohrungen 551 ausgebildet sind, die sich alle bis zu einer Ebene 5510 erstrecken, wie es aus Fig. 11 und 12 ersichtlich ist. Durch diese Ausbildung weisen die am Außenrand angeordneten Sackbohrungen 551 die größte Tiefe, die am Scheitel angeordneten Sackbohrungen 551 die geringste Tiefe auf, was günstig für die Fließgeräuschminderung ist. Der Querschnitt der Sackbohrungen 551 entspricht dem Querschnitt der Durchgangsbohrungen 56 nach dem Ausführungsbeispiel gemäß Fig. 4 und 8. Die Sackbohrungen 551 sind zueinander parallel und senkrecht zur Steuerscheibe 3 angeordnet.

Neben den Öffnungen, deren Querschnitt jeweils ein Quadrat 6 bildet, können auch anders gestaltete Öffnungen vorgesehen sein. In Fig. 9 ist eine vorteilhafte Ausbildung dargestellt, bei der die Öffnungen im Querschnitt einen Kreis 7 bilden. Der Durchmesser 71 des Kreises 7 beträgt 0,8 mm. Der geringste Abstand 70 der Kreise 7 zueinander beträgt 0,3 mm. Außerdem kann auch die von Wasser angeströmte Oberfläche 50 eine napfförmige oder eine kegelförmige Wölbung aufweisen. Auch kann die Oberfläche 50 als Paraboloid oder Hyperboloid geformt sein.

Bei den vorstehend beschriebenen Ausführungsbeispielen ist als Ventil ein Mischventil vorgesehen. Selbstverständlich kann der Körper 5 zur Fließgeräuschminderung auch in einem Ventil zur Mengendosierung oder einem Ventil mit Umschaltfunktion zu verschiedenen Verbrauchern und der Mengendosierung eingesetzt werden.

## Patentansprüche

1. Geräuscharmes Ventil für Sanitärarmaturen, insbesondere Misch- und Dosierventil, mit einer Festscheibe (2), die mindestens eine Wassereinlaßöffnung enthält, und einer zur Festscheibe (2) beweglich angeordneten Steuerscheibe (3), die mit wenigstens einem als Durchbruch ausgebildeten Überströmkanal (30) versehen ist, und deren von der Festscheibe (2) abgekehrte Stirnseite von einer Abdeck- und Führungsscheibe (4,4b) gehalten ist, wobei die Abdeck- und Führungsscheibe (4,4b) eine wenigstens dem Querschnitt des Durchbruchs entsprechende Höhlung (40) aufweist, in deren Bereich ein Körper (5) zur Fließgeräuschminderung angeordnet ist, der sich mit seinem Außenrand (52) bis zur Stirnseite der Steuerscheibe (3) erstreckt, **dadurch gekennzeichnet, daß** ein starrer Körper (5) aus Kunststoff vorgesehen ist, dessen dem zuströmenden Wasser zugekehrte Oberfläche (50) kugelförmig oder hohlkegelförmig oder hyperboloidförmig oder paraboloidförmig oder napfförmig gestaltet ist, und daß der Körper (5) zumindest an der dem zuströmenden Wasser zugekehrten Oberfläche (50) eine Perforation (51) aufweist.

2. Geräuscharmes Ventil nach Anspruch 1, **dadurch gekennzeichnet, daß** der Körper (5) als konkav gewölbte, mit einer Perforation (51) versehene Platte (55) ausgebildet ist, die mit wenigstens einem Teil ihres Außenrandes (52) an der Stirnfläche der Steuerscheibe anliegt, während andererseits der Scheitel (53) der Wölbung im Grund der Höhlung (40) abgestützt ist, so daß eine etwa ringförmige Kammer (550) in der Höhlung (40) gebildet ist.

3. Geräuscharmes Ventil nach Anspruch 1, **dadurch gekennzeichnet, daß** der Körper (5) einstückig an der aus Kunststoff hergestellten Abdeck- und Führungsscheibe (4b) angeformt ist, wobei die Perforation (51) von einzelnen Sackbohrungen (551) gebildet ist, die sich vorzugsweise bis in eine Ebene (5510) erstrecken, so daß die am Außenrand angeordneten Sackbohrungen (551) die größte Tiefe, die am Scheitel angeordneten Sackbohrungen (551) die geringste Tiefe aufweisen.

4. Geräuscharmes Ventil nach einem der Ansprüche 1 bis 3, **dadurch gekennzeichnet, daß** die vom Wasser angeströmte Oberfläche (50) des Körpers (5) als Kugelsegment ausgebildet ist, wobei das Kugelsegment eine Höhe (54) von 1 bis 4 mm, vorzugsweise 3 mm, hat, während der Kugeldurchmesser 8 bis 15 mm, vorzugsweise 11 mm, aufweist.

5. Geräuscharmes Ventil nach einem der Ansprüche 1 bis 3, **dadurch gekennzeichnet, daß** der Scheitel der vom Wasser angeströmten hohlkegelförmig oder hyperboloidförmig oder paraboloidförmig oder napfförmig ausgebildeten Fläche zum Außenrand etwa eine Höhe von 1 bis 4 mm aufweist.

6. Geräuscharmes Ventil nach einem der Ansprüche 1 bis 5, **dadurch gekennzeichnet, daß** die Perforation (51) regelmäßig ausgebildet ist, und die einzelnen Öffnungen im Querschnitt ein Quadrat (6) oder einen Kreis (7) bilden, wobei die Seitenlänge (61) des Quadrats (6) oder der Durchmesser (71) des Kreises (7) 0,5 bis 1,1 mm , vorzugsweise 0,8 mm , aufweist, und der geringste Abstand (60,70) der Quadrate (6) oder der Kreise (7) zueinander 0,2 bis 0,4 mm , vorzugsweise 0,3 mm beträgt.

7. Geräuscharmes Ventil nach wenigstens einem der Ansprüche 1 bis 6, **dadurch gekennzeichnet, daß** die Sackbohrungen (551) oder Durchgangsbohrungen (56) zueinander parallel und senkrecht zur Steuerscheibe (3) angeordnet sind.

8. Geräuscharmes Ventil nach wenigstens einem der Ansprüche 1 bis 7, **dadurch gekennzeichnet, daß** die Steuerscheibe (3) in der mit einer oder mehreren Einlaßöffnungen (20,21) als Steuerkante zusammenwirkende Seitenwand eine Verzahnung (301) aufweist, so daß in der Anfangsphase des Öffnungsvorgangs und der Endphase des Schließvorgangs das in dem Überströmkanal (30) einströmende Wasser von Zahnlücken (302) in Einzelströme unterteilt wird.

9. Geräuscharmes Ventil nach Anspruch 8, **dadurch gekennzeichnet, daß** eine Einlaßöffnung (20) für Kaltwasser und eine Einlaßöffnung (21) für Warmwasser vorgesehen ist, die etwa auf einem Kreisbogen nebeneinander in der Festscheibe (2) ausgebildet sind, wobei der Überströmkanal (30) eine entsprechend kreisbogenförmige Seitenwand aufweist, in der etwa sieben Zahnlücken (302) ausgebildet sind, deren maximale Tiefe etwa 1,1 mm beträgt.

## Claims

1. Low-noise valve for sanitary fittings, especially a mixing and proportioning valve, having a fixed disc (2) which has at least one water inlet opening, and having a control disc (3) arranged to move with respect to the fixed disc (2) and provided with at least one flow-over channel (30) in the form of a through-gap, that end face of the control disc (3) which is remote from the fixed disc (2) being held by a covering and guiding disc (4, 4b), and the covering and guiding disc (4, 4b) having a recess (40) corresponding at least to the cross-section of the through-gap, in the region of which recess (40) there is arranged, for reducing flow noise, a body (5), the outer edge (52) of which extends to the end face of the control disc (3), **characterised in that** a rigid body (5) of plastics material is provided, the surface (50) of which that faces the inflowing water is of spherical or hollow-conical or hyperboloid or paraboloid or bowl-shaped form; and the body (5) has a perforation (51) at least on the surface (50) that faces the inflowing water.

2. Low-noise valve according to claim 1, **characterised in that** the body (5) is in the form of a concavely curved plate (55) provided with a perforation (51), at least part of the outer edge (52) of which plate (55) is in contact with the end face of the control disc whereas, on the other hand, the crown (53) of the curvature rests in the base of the recess (40) so that an approximately annular chamber (550) is formed in the recess (40).

3. Low-noise valve according to claim 1, **characterised in that** the body (5) is integrally formed on the covering and guiding disc (4b), which is made from plastics material, the perforation (51) being formed by individual blind holes (551) which preferably extend to a plane (5510) so that the blind holes (551) arranged at the outer edge have the greatest depth and the blind holes (551) arranged at the crown have the smallest depth.

4. Low-noise valve according to one of claims 1 to 3, **characterised in that** that surface (50) of the body (5) against which the water flows is in the form of a spherical segment, the spherical segment having a height (54) of from 1 to 4 mm, preferably 3 mm, whereas the diameter of the sphere is from 8 to 15 mm, preferably 11 mm.

5. Low-noise valve according to one of claims 1 to 3, **characterised in that** the crown of the surface of hollow-conical or hyperboloid or paraboloid or bowl-shaped form against which the water flows has a height, from the outer edge, of about from 1 to 4 mm.

6. Low-noise valve according to one of claims 1 to 5, **characterised in that** the perforation (51) is of regular form, and the individual openings form, in cross-section, a square (6) or a circle (7), the length (61) of the sides of the square (6) or the diameter (71) of the circle (7) being from 0.5 to 1.1 mm, preferably 0.8 mm; and the smallest spacing (60, 70) of the squares (6) or circles (7) from one another is from 0.2 to 0.4 mm, preferably 0.3 mm.

7. Low-noise valve according to at least one of claims 1 to 6, **characterised in that** the blind holes (551) or through-holes (56) are arranged parallel to one another and perpendicular to the control disc (3).

8. Low-noise valve according to at least one of claims 1 to 7, **characterised in that** the control disc (3) has, in the side wall co-operating as a control edge with one or more inlet openings (20, 21), a toothed arrangement (301) so that, in the initial phase of the opening process and in the end phase of the closing process, the inflowing water in the flow-over channel (30) is divided up into individual flows by gaps (302) between the teeth.

9. Low-noise valve according to claim 8, **characterised in that** there are provided an inlet opening (20) for cold water and an inlet opening (21) for hot water, which are formed in the fixed disc (2) next to one another approximately on an arc of a circle, the flow-over channel (30) having a side wall shaped in a corresponding arc of a circle, in which side wall there are formed about seven gaps (302) between teeth, the maximum depth of which gaps (302) is about 1.1 mm.

## Revendications

1. Robinet à faible bruit pour robinetteries sanitaires, en particulier robinet mitigeur et doseur, comportant un disque fixe (2) qui contient au moins un orifice d'admission d'eau, et un disque de commande (3) disposé de façon mobile par rapport au disque fixe (2) pourvu d'au moins un canal d'écoulement (30) configuré sous forme de passage, et dont la face frontale opposée au disque fixe (2) est maintenue par un disque de recouvrement et de guidage (4, 4b), le disque de recouvrement et de guidage (4, 4b) présentant une cavité (40) correspondant au moins à la section transversale du passage, et dans la zone de laquelle est disposé un corps (5) destiné à réduire les bruits d'écoulement, qui s'étend avec son bord extérieur (52) jusqu'à la face frontale du disque de commande (3),
**caractérisé en ce qu'**
il est prévu un corps fixe (5) en matière plastique, dont la surface (50) tournée vers l'afflux d'eau est configurée en forme de sphère, en forme de cône creux, en forme d'hyperbole, en forme de parabole ou en forme de cuvette, et **en ce que** le corps (5) présente au moins au niveau de la surface (50) tournée vers l'afflux d'eau une perforation (51).

2. Robinet à faible bruit selon la revendication 1,
**caractérisé en ce que**
le corps (5) est configuré sous forme d'une plaque (55) concave pourvue d'une perforation (51), qui repose par au moins une partie de son bord extérieur (52) contre la surface frontale du disque de commande, tandis que de l'autre côté, le sommet (53) de la courbure est soutenu dans le fond de la cavité (40), de telle sorte qu'il se forme dans la cavité (40) une chambre à peu près annulaire (550).

3. Robinet à faible bruit selon la revendication 1,
**caractérisé en ce que**
le corps (5), formé d'une seule pièce au niveau du disque de recouvrement et de guidage (4b), est fabriqué en matière plastique, la perforation (51) étant formée par des alésages borgnes individuels (551), qui s'étendent de préférence jusque dans un plan (5510), de telle sorte que les alésages borgnes (551) disposés au niveau du bord extérieur présentent la profondeur la plus importante tandis que les alésages borgnes (551) disposés au niveau du sommet présentent la profondeur la plus faible.

4. Robinet à faible bruit selon l'une des revendications 1 à 3,
**caractérisé en ce que**
la surface (50) du corps (5) sur laquelle s'écoule l'eau est configurée sous forme de segment de sphère, le segment de sphère possédant une hauteur (54) comprise entre 1 et 4 mm, de préférence égale à 3 mm, tandis que le diamètre de la sphère est compris entre 8 et 15 mm, de préférence égal à 11 mm.

5. Robinet à faible bruit selon l'une des revendications 1 à 3,
**caractérisé en ce que**
le sommet de la surface sur laquelle s'écoule l'eau, configurée en forme de cône creux, en forme d'hyperbole, en forme de parabole ou en forme de cuvette, présente par rapport au bord extérieur une hauteur d'environ 1 à 4 mm.

6. Robinet à faible bruit selon l'une des revendications 1 à 5,
**caractérisé en ce que**
la perforation (51) est configurée de façon régulière, et les orifices individuels forment dans la section transversale un carré (6) ou un cercle (7), la longueur du côté (61) du carré (6) ou le diamètre (71) du cercle (7) étant compris entre 0,5 et 1,1 mm, de préférence égal à 0,8 mm, et la distance (60, 70) la plus faible entre les carrés (6) ou les cercles (7) les uns par rapport aux autres étant comprise entre 0,2 et 0,4 mm, de préférence égale à 0,3 mm.

7. Robinet à faible bruit selon au moins l'une des revendications 1 à 6,
**caractérisé en ce que**
les alésages borgnes (551) ou les orifices traversants (56) sont disposés parallèlement les uns aux autres et perpendiculairement au disque de commande (3).

8. Robinet à faible bruit selon au moins l'une des revendications 1 à 7,
**caractérisé en ce que**
le disque de commande (3) présente une denture (301), dans la paroi latérale coopérant avec un ou plusieurs orifices d'admission (20, 21) en tant qu'arête de commande, de telle sorte qu'au cours de la phase initiale du processus d'ouverture et au cours de la phase finale du processus de fermeture, l'eau s'écoulant dans le canal de déversement (30) est divisée en flux individuels par des espaces entre-dents (302).

9. Robinet à faible bruit selon la revendication 8,
**caractérisé en ce qu'**
il est prévu un orifice d'admission (20) pour l'eau froide et un orifice d'admission (21) pour l'eau chaude, qui sont configurés l'un à côté de l'autre à peu près sur un arc de cercle dans le disque fixe (2), le canal de déversement (30) présentant une paroi latérale correspondante en forme d'arc de cercle, dans laquelle sont configurés environ sept espaces entre-dents (302) dont la profondeur maximale est environ égale à 1,1 mm.
